# EUROPÄISCHE PATENTSCHRIFT

(11) **EP 1 395 910 B1**
(45) Veröffentlichungstag und Bekanntmachung des Hinweises auf die Patenterteilung: **13.10.2004**
(21) Anmeldenummer: 02732750.1
(22) Anmeldetag: 04.06.2002
(51) Int. Cl.: G06F 13/40, G06F 1/08, G06F 1/32, G06K 19/07

(54) **ELEKTRONISCHE SCHALTUNG MIT ASYNCHRONER TAKTUNG VON PERIPHERIEEINHEITEN**
ELECTRONIC CIRCUIT HAVING PERIPHERAL UNITS WITH ASYNCHRONOUS CLOCK PULSES
CIRCUIT ELECTRONIQUE AVEC UNITES PERIPHERIQUES A MODE D'IMPULSIONS ASYNCHRONE

(30) Priorität: 06.06.2001 DE 10127424
(43) Veröffentlichungstag der Anmeldung: 10.03.2004
(73) Patentinhaber: Infineon Technologies AG, 81669 München (DE)
(72) Erfinder: ELBE, Astrid, 81243 München (DE); JANSSEN, Norbert, 81667 München (DE); SEDLAK, Holger, 82054 Sauerlach (DE)
(74) Vertreter: Zinkler, Franz, Dipl.-Ing.
(86) Internationale Anmeldenummer: PCT/EP2002/006147
(87) Internationale Veröffentlichungsnummer: WO 2002/099664

(56) Entgegenhaltungen:
- EP-A- 0 569 131
- US-A- 5 708 801
- US-A- 5 778 237
- US-A- 6 115 823

## Beschreibung

Die vorliegende Erfindung bezieht sich auf elektronische Schaltungen und insbesondere auf elektronische Schaltungen, in denen eine zentrale Verarbeitungseinheit (CPU) und zumindest eine Peripherieeinheit verwendet werden, wie es z.B. bei Kryptographiecontrollern der Fall ist.

Mit der zunehmenden Verbreitung von bargeldlosem Zahlungsverkehr, elektronischer Datenübertragung über öffentliche Netze und dem Austausch von Kreditkartennummern über öffentliche Netze steigt der Bedarf nach Kryptographiealgorithmen, um digitale Signaturen, Authentifikationen oder Verschlüsselungsaufgaben durchführen zu können. Bekannte Kryptographiealgorithmen umfassen asymmetrische Verschlüsselungsalgorithmen, wie z.B. den RSA-Algorithmus oder auf elliptischen Kurven basierende Verfahren, oder symmetrische Verschlüsselungsverfahren, wie z.B. Verschlüsselungsverfahren nach dem DES- oder AES-Standard.

Um die durch die Kryptographiealgorithmen vorgeschriebenen Berechnungen im Alltag in akzeptabler Geschwindigkeit durchführen zu können, werden eigens vorgesehene Kryptographiecontroller eingesetzt. Solche Kryptographiecontroller werden beispielsweise in Chipkarten, wie z.B. SIM-Karten oder Signaturkarten, beispielsweise zur Zahlung mit dem Mobiltelefon, für Homebankingtransaktionen oder rechtsverbindliche elektronische Unterschriften verwendet. Alternativ werden Kryptographiecontroller in Computern oder Servern als Sicherheits-IC verwendet, um eine Authentifikation durchzuführen, oder um Verschlüsselungsaufgaben übernehmen zu können, welche beispielsweise aus der sicheren Übermittlung von Kreditkartennummern, der Übermittlung von Emails geheimen Inhalts und dem sicheren bargeldlosen Zahlungsverkehr über das Internet bestehen können.

Es werden hohe Anforderungen an die Kryptographiecontroller gestellt, damit dieselben den hohen Ansprüchen der Benutzer genügen und sich auf dem Markt etablieren können. Um eine hohe algorithmische Sicherheit gewährleisten zu können, müssen Kryptographiecontroller beispielsweise eine beachtliche Rechenleistung zur Verfügung stellen. Der Grund hierfür besteht darin, daß die Sicherheit vieler kryptographischer Algorithmen, wie z.B. dem bekannten RSA-Algorithmus, entscheidend von der Bitlänge des verwendeten Schlüssels abhängt, und daß folglich die Kryptographiecontroller, die die entsprechenden Kryptographiealgorithmen ausführen, in der Lage sein müssen, mit Zahlen möglichst großer Länge umzugehen. Bei dem RSA-Algorithmus haben sich beispielsweise Schlüsselbitlängen von 1.024 Bits oder teilweise sogar 2.048 Bits durchgesetzt, wobei im Vergleich hierzu derzeitige Allzweckprozessoren mit 8-Bit-, 32-Bit- oder 64-Bit-Zahlen arbeiten.

Zusätzlich müssen Kryptographiecontroller eine hohe Rechenleistung aufweisen, um die für den jeweiligen kryptographischen Algorithmus erforderlichen Berechnungen in angemessener Zeit durchführen zu können. So wäre es beispielsweise für einen Benutzer unzumutbar, mehrere Minuten auf eine Authentifikationsüberprüfung oder eine Zahlungstransaktion warten zu müssen. Um diese hohen Rechenleistungen erzielen zu können, verarbeiten bekannte Kryptographiecontroller viele der durchzuführenden Rechenoperationen parallel, um die Rechengeschwindigkeit zu erhöhen.

Bei der Verwendung von Kryptographiecontrollern in Chipkarten, wie z.B. SIM-Karten oder Signaturkarten, ergibt sich ein zusätzliches Problem daraus, daß dieselben als Massenprodukt preisgünstig herstellbar sein müssen. Obwohl dieselben also rechenaufwendige Algorithmen in möglichst kurzer Zeit abarbeiten müssen, darf umgekehrt die elektronische Schaltung nicht zu aufwendig und damit teuer sein.

Zudem steht den Kryptographiecontrollern lediglich eine begrenzte Energie zur Verfügung, so daß hierdurch dem Controllerentwurf eine weitere Einschränkung bezüglich des Schaltungsaufwands auferlegt wird. Terminals für kontaktbehaftete Chipkarten liefern beispielsweise einen maximalen Strom von 30 mA, wobei bei kontaktlosen Anwendungen und mobilen Anwendungen, wie z.B. einer SIM-Karte in einem Handy, der Strom auf unter 10 mA begrenzt sein kann. Folglich ist die Rechengeschwindigkeit der Coprozessoren einerseits durch die Herstellungskosten und andererseits durch die zur Verfügung stehende Energie begrenzt.

Ein weiteres Problem bei dem Entwurf von Kryptographiecontrollern ergibt sich aus der Koexistenz vieler allgemein üblicher Kryptographiealgorithmen. In dem Fall einer Chipkarte wird sich beispielsweise derjenige Kryptographiecontroller auf dem Markt durchsetzen, der zur Durchführung der meisten üblichen Kryptographiealgorithmen fähig ist, und der folglich eine breite Einsatzfähigkeit und eine hohe Anwenderfreundlichkeit aufweist. Ein solcher "multifunktionaler" Kryptographiecontroller verhindert beispielsweise, daß ein Benutzer mehrere Chipkarten herumtragen muß, von denen jede für eine spezielle Anwendung bzw. für ein spezielles Kryptographieverfahren vorgesehen ist. Ein solcher multifunktionaler Kryptographiecontroller muß jedoch aufgrund der vielseitigen Verwendung zu einer Vielzahl von Rechenoperationen in der Lage sein, die von den vielen kryptographischen Algorithmen verwendet werden, was zu einer Zunahme der Komplexität oder einer Reduzierung der Geschwindigkeit der elektronischen Schaltung führt.

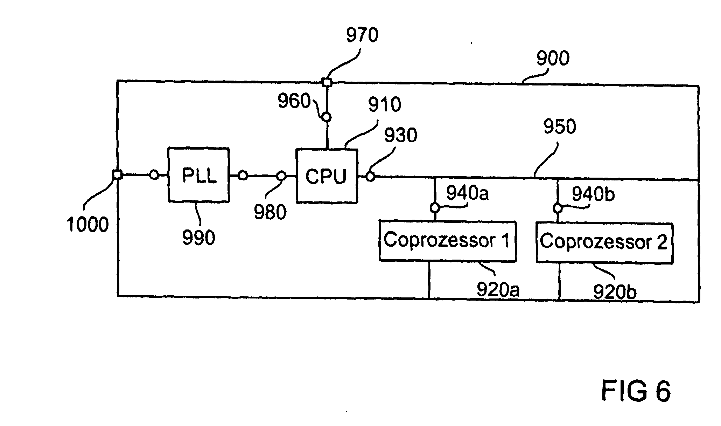

Ein möglicher Entwurf für einen Kryptographiecontroller, der einerseits eine hohe Multifunktionalität und andererseits eine hohe Verarbeitungsgeschwindigkeit aufweist, besteht aus einem Verbund aus einer zentralen Verarbeitungseinheit und einem oder mehreren Coprozessoren, welche parallel arbeiten, wie es beispielsweise bei modernen PCs, aber auch bei modernen Graphikkarten der Fall ist. Ein Beispiel für ein Blockschaltbild eines solchen Kryptographiecontrollers ist in Fig. 6 gezeigt. Ein Chip 900 umfaßt eine CPU (zentrale Verarbeitungseinheit) 910 und mehrere Coprozessoren 920a und 920b, wobei zur Vereinfachung in Fig. 6 lediglich zwei Coprozessoren gezeigt sind. Die Datenanschlüsse 930, 940a und 940b der CPU 910 und der Coprozessoren 920a und 920b sind über einen Datenbus 950 miteinander verbunden. Die CPU 910 umfaßt ferner einen Datenanschluß 960, der über eine Anschlußvorrichtung 970 mit einem externen Datenbus verbindbar ist. Darüber hinaus umfaßt die CPU 910 einen Taktanschluß 980, der über eine PLL 990 mit einer Taktanschlußvorrichtung 1000 verbunden ist, um ein externes Taktsignal zu empfangen.

Obwohl der Kryptographiecontroller von Fig. 6 durch das Vorsehen von mehreren Coprozessoren 920a und 920b zum Durchführen von verschiedenen Aufgaben, wie z.B. für verschiedene Verschlüsselungsalgorithmen, und zur parallelen Durchführung von Rechenoperationen geeignet ist, besteht ein Problem dieser Anordnung darin, daß die gesamte Schaltung 900 von einem einzigen externen Taktsignal 1000 getaktet wird, und daß die PLL 990 folglich lediglich als ein Taktvervielfacher für den gesamten Chip 900 vorgesehen ist. Bei dieser Schaltung ist es deshalb nicht möglich, die CPU 910 und die Coprozessoren 920a und 920b mit unterschiedlichen Taktfrequenzen zu takten, um beispielsweise die verschiedenen Rechenzeiten, die für die von den Coprozessoren 920a und 920b zu berechnenden Aufgaben erforderlich sind, durch unterschiedliche Taktfrequenzen aufeinander abzustimmen.

Beim Design eines Chips 900 in CMOS-Technologie wird das Problem zusätzlich dadurch verschärft, daß in diesem Fall der Stromverbrauch von der Taktfrequenz bzw. der Umschaltfrequenz der MOSFETs abhängt. Werden somit einige Coprozessoren schneller als notwendig getaktet, so wird mehr Strom als notwendig verbraucht.

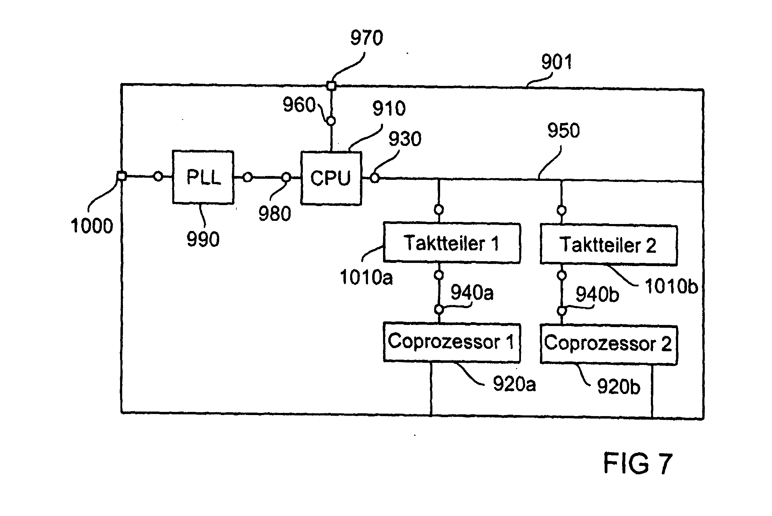

Eine mögliche Verbesserung des Kryptographiecontrollerentwurfs von Fig. 6 besteht darin, neben dem Taktvervielfacher für den gesamten Chip einen Taktteiler für jeden Coprozessor vorzusehen. Ein Blockschaltbild eines solchen Kryptographiecontrollers ist in Fig. 7 gezeigt, wobei in Fig. 7 für Elemente, die zu denjenigen in Fig. 6 identisch sind, gleiche Bezugszeichen vergeben wurden. Wie es zu sehen ist, ist zwischen jeden Coprozessor 920a und 920b und den Datenbus 950 ein Taktteiler 1010a und 1010b geschaltet, welcher ermöglichen soll, daß die Coprozessoren 920a und 920b mit einem bestimmten Vielfachen des PLL-Takts getaktet werden können. Durch Vorsehen der Taktteiler 1010a und 1010b ist es folglich möglich, die Coprozessoren 920a und 920b unabhängig voneinander mit unterschiedlichen Vielfachen des Takts der CPU 910 zu takten. Auf diese Weise wird ein Verlangsamen der Taktfrequenz für solche Coprozessoren ermöglicht, deren Berechnung entweder weniger Zeit erfordert, oder deren Ergebnis erst zu einem späteren Zeitpunkt erforderlich ist.

Ein Nachteil der Schaltung 901 von Fig. 7 besteht darin, daß die Coprozessoren 920a und 920b lediglich mit bestimmten Vielfachen des Takts der PLL 990 synchron getaktet werden können. Diese synchrone Taktung mit lediglich Vielfachen des PLL-Takts vermeidet zwar einerseits die Notwendigkeit eines Einsynchronisierens der Coprozessoren 920a und 920b, verhindert aber andererseits die Einstellung der Taktfrequenzen der Coprozessoren 920a und 920b auf Taktfrequenzen, die keine Vielfachen sind. Insbesondere ist es nicht möglich, einen oder mehrere der Coprozessoren 920a und 920b mit einer Taktfrequenz zu takten, die um einen anderen Faktor als einen ganzzahligen Faktor schneller als die Taktfrequenz der CPU 910 ist, um beispielsweise eine sehr aufwendige modulare Multiplikation schneller durchführen zu können.

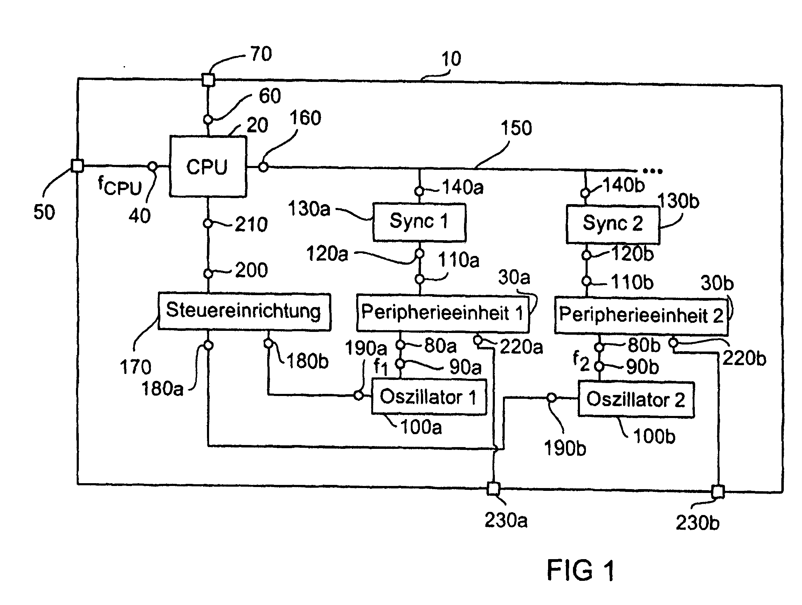

Dokument US 5,778,237 bezieht sich auf einen Datenprozessor und einen Ein-Chip-Mikrocomputer mit sich ändernder Taktfrequenz und Betriebsspannung. Bei einer ersten Reihe von Ausführungsbeispielen, die sich auf die Figuren 1 - 14 beziehen, werden CPU 100 bzw. 300 und Co-Prozessoren, wie ein Multiplizierer 101 bzw. 301 und ein Dividierer 102 und 302, über Taktsignale an ihren jeweiligen Takteingangsanschlüssen betrieben, die durch PLL-Schaltungen und Frequenzdividierer aus einem gemeinsamen von außen stammenden Taktsignal, das an einem Takteingang 121 bzw. 321 anliegt, abgeleitet werden. Das Verhältnis der Taktfrequenzen der einzelnen Module 100 - 102 bzw. 300 - 302 ist folglich immer derart, daß das Verhältnis zwischen denselben ganz rational ist, bzw. daß die Taktfrequenzen derselben nicht teilerfremd zueinander sind.

Das Dokument JP02-090 382 A offenbart eine integrierte Halbleiterschaltung mit einer CPU 2, einem RAM-Modul 3, einem Zeifgebermodul 4, einem seriellen I/O-Schaltungsmodul 5, einem DMAC-Modul 6 und einem DMAC-Modul 7. Die Module 2, 3, 4, 6 und 7 werden über eine Frequsnzteilerschaltung 11 auf der Basis eines Ausgangssignals eines Taktpulsgenerators 10 mit unterschiedlichen Takten versorgt. An das I/O-Schaltungsmodul 5 wird ein unabhängiges Taktsignal CLK2 angelegt, wobei ein Datentransfer, der über den Bus 8 verläuft, der ein asynchroner Bus ist, in synchronisierte Steuerung versetzt wird. Das Dokument JP 02-090 382 A offenbart nicht die Verwendung teilerfremder Takte zwischen Recheneinheit und CPU.

Das Dokument US 6,101,255 bezieht sich auf ein programmierbares kryptographisches Verarbeitungssystem. Eine asynchrone Verarbeitung schlägt Dokument D6 lediglich im Hinblick auf zwei Schnittstellenprozessoren 13 und 15 vor, die für Ausgabe/Empfang von Klartext- bzw. Chiffretextschnittstellendaten vorgesehen sind. Zur Synchronisation mit internen Verarbeitungseinheiten 14 und 16 dient ein interner Speicher 9 (vgl. Spalte 6, Zeiten 52-63). Auch Dokument US 6,101,255 schlägt deshalb die Verwendung asynchroner Taktsignale lediglich für eine I/O-Schnittstelle vor und offenbart damit nicht eine Vorgehensweise im Hinblick auf die Verwendung teilerfremder Takte für CPU und eine zugeordnete Recheneinheit.

Die Aufgabe der vorliegenden Erfindung besteht darin, eine elektronische Schaltung und ein Verfahren zum Steuern derselben zu schaffen, so daß die elektronische Schaltung effektiver arbeitet.

Diese Aufgabe wird durch eine elektronische Schaltung gemäß Anspruch 1 und ein Verfahren gemäß Anspruch 13 gelöst.

Eine erfindungsgemäße elektronische Schaltung umfaßt eine zentrale Verarbeitungseinrichtung (CPU) mit einem Taktanschluß und einem Datenanschluß sowie eine Peripherieeinheit mit einem Taktanschluß der Peripherieeinheit und einem Datenanschluß, wobei der Taktanschluß mit einem Signalausgang eines steuerbaren Oszillators oder mit einem externen Takteingang verbunden ist. Es ist eine Synchronisationseinrichtung mit einem ersten und einem zweiten Datenanschluß vorgesehen, wobei der erste Datenanschluß mit dem Datenanschluß der Peripherieeinheit verbunden ist. Zusätzlich verbindet ein Datenbus den Datenanschluß der CPU mit dem zweiten Datenanschluß der Synchronisationseinrichtung.

Ein erfindungsgemäßes Verfahren zum Steuern einer elektronischen Schaltung mit einer zentralen Verarbeitungseinheit und einer Peripherieeinheit, die über einen Datenbus miteinander verbunden sind, umfaßt das Takten der zentralen Verabreitungseinheit mit einem Takt einer ersten Taktfrequenz und das Takten der Peripherieeinheit mit einem Takt einer zweiten Taktfrequenz, wobei die erste Taktfrequenz und die zweite Taktfrequenz teilerfremd sind. Es findet ferner eine Synchronisierung von Daten, die über den Datenbus zwischen der zentralen Verarbeitungseinheit und der Peripherieeinheit übertragen werden, statt.

Der vorliegenden Erfindung liegt die Erkenntnis zugrunde, daß es durch Vorsehen eines eigenen Takts, wie z.B. eines eignen Oszillators oder eines eignen externen Taktanschlusses, für die (bzw. mehrere) Peripherieeinheiten möglich ist, die Peripherieeinheit tatsächlich asynchron zu der CPU zu betreiben, bzw. derart zu betreiben, daß die Taktfrequenz der CPU unabhängig von der der Peripherieeinheit ist. Auf diese Weise wird es ermöglicht, die Taktfrequenz der Peripherieeinheit genauer als lediglich in bestimmten ganzzahligen Vielfachen oder Bruchteilen des Takts der CPU an die zur Verfügung stehende Energie, die Aufgabe der Peripherieeinheit oder die gerade vorliegende Applikation anzupassen. Obwohl der asynchrone Betrieb der Peripherieeinheit eine Einsynchronisation derselben erforderlich macht, wird durch die asynchrone Taktfrequenzsteuerung ein schnellerer Betrieb der elektronischen Schaltung bei gleichzeitig gleichbleibender Energieaufnahme geliefert. Insbesondere wird jedoch durch Vorsehen eines getrennten steuerbaren Oszillators für die Peripherieeinheit ermöglicht, daß die Peripherieeinheit schneller als die CPU getaktet wird, und daß somit sehr rechenaufwendige Operationen, wie z.B. eine modulare Multiplikation, sogar schneller als die CPU-Taktfrequenz durchgeführt werden können.

Gemäß einem Ausführungsbeispiel sind die CPU, die Peripherieeinheit, die Synchronisationseinrichtung, der Datenbus und der Oszillator auf einer gemeinsamen Chipkarte angeordnet, vorzugsweise sogar in einem Chip integriert, wobei zusätzlich eine Steuereinrichtung vorgesehen ist, um den steuerbaren Oszillator abhängig von der für die elektronische Schaltung zur Verfügung stehenden Energie, abhängig von einer von der Peripherieeinheit auszuführenden Aufgabe und/oder abhängig von der gegenwärtigen Applikation der elektronischen Schaltung zu steuern.

Falls die erfindungsgemäße elektronische Schaltung als ein Kryptographiecontroller ausgeführt ist, kann die Peripherieeinheit beispielsweise als ein Coprozessor für einen einer Gruppe von kryptographischen Algorithmen ausgeführt sein, die eine symmetrische Verschlüsselung, wie z.B. die Verschlüsselung nach dem DES- oder AES-Standard, oder eine asymmetrische Verschlüsselung, wie z.B. den RSA-Algorithmus oder eine auf elliptischen Kurven basierende Verschlüsselung, umfaßt. Peripherieeinheiten im Sinne der vorliegenden Anmeldung können jedoch ferner ein UART-Modul (universal asynchronous Receiver-Transmitter = universeller asynchroner Sende/Empfänger), zum Datenaustausch mit einem Terminal, ein Sensorelement zum Überprüfen sicherheitskritischer Parameter, einen Zufallsgenerator, ein Filter oder dergleichen umfassen. Vorzugsweise sind mehrere Kryptographiecontroller vorgesehen, die verschiedene Aufgaben übernehmen bzw. verschiedene kryptographische Algorithmen ausführen können. Durch die erfindungsgemäße asynchrone Taktung der Kryptographiecoprozessoren ist es in diesem Fall möglich, den Betrieb des Kryptographiecontrollers möglichst effektiv an die jeweilige Anwendung anzupassen, indem beispielsweise die Taktfrequenzen der Coprozessoren derart eingestellt wird, daß die Ergebnisse der verschiedenen Berechnungen der Coprozessoren gleichzeitig zur weiteren Verwendung vorliegen. Insbesondere ist es möglich, für eine sehr zeitaufwendige Aufgabe eines Kryptographiecoprozessors demselben einen schnelleren Takt als demjenigen der CPU zuzuführen. Insgesamt führt dies zu einem Kryptographiecontroller, der aufgrund seiner höheren Operationsgeschwindigkeit zu einer größeren Marktakzeptanz führt.

Bei dem Einsatz einer erfindungsgemäßen elektronischen Schaltung als Kryptographiecontroller auf einer Chipkarte oder SIM-Karte ergibt sich aufgrund der asynchronen Taktung der Peripherieeinheiten der weitere Vorteil gegenüber herkömmlichen Entwürfen, daß es aufgrund der genaueren Einstellbarkeit der Peripherieeinheittakte auch auf teilerfremde Takte möglich ist, die ohnehin knappe zur Verfügung stehende Energie vollständig auszunutzen, wodurch wiederum die Rechengeschwindigkeit bei gegebener Energieversorgung, wie sie beispielsweise durch ein Kontaktlosterminal vorgegeben wird, verbessert werden kann. Kontaktterminals liefern beispielsweise lediglich einen Strom von 30 mA bei, wobei bei Kontaktlosterminals und mobilen Anwendungen sogar weniger als 10 mA zur Verfügung steht, so daß eine optimale Nutzung der zugeführten Energie enorm wichtig ist. Zudem kann die Taktsteuerung für die Peripherieeinheiten kontinuierlich und optimal an die zeitlichen Schwankungen der von dem Terminal zur Verfügung gestellten Energie angepaßt werden, die sich beispielsweise aus den sich ändernden Abständen zwischen Terminal und Chipkarte oder aus einem sich ändernden Ladezustand der Batterie eines Mobilgerätes, in dem die Chipkarte verwendet wird, wie z.B. einem Handy, ergeben.

Ein weiterer Vorteil der vorliegenden Erfindung ergibt sich daraus, daß die Taktung der Peripherieeinheit unabhängig von dem Takt der CPU ist, und daß deshalb die Design-Komplexität reduziert wird, da keine elektronischen Rückwirkungen auf die CPU auftreten.

Weitere bevorzugte Ausgestaltungen und Weiterbildungen der vorliegenden Erfindung ergeben sich aus den beiliegenden Ansprüchen.

Bevorzugte Ausführungsbeispiele der vorliegenden Erfindung werden nachfolgend bezugnehmend auf die beiliegenden Zeichnungen näher erläutert. Es zeigen:
- Fig. 1: ein Blockschaltbild eines Kryptographiecontrollers gemäß einem Ausführungsbeispiel der vorliegenden Erfindung;
- Fig. 2: unterschiedliche Taktsignalverläufe, um die asynchrone Taktung einer Peripherieeinheit zu veranschaulichen;
- Fig. 3: eine Skizze, die die Aufteilung der zur Verfügung stehenden Energie auf die Peripherieeinheiten durch Anpassung der Peripherieeinheittakte gemäß einem Ausführungsbeispiel der vorliegenden Erfindung veranschaulicht;
- Fig. 4: eine Skizze, die eine Taktung von Peripherieeinheiten gemäß einem weiteren Ausführungsbeispiel der vorliegenden Erfindung veranschaulicht;
- Fig. 5: ein Schaltbild einer Synchronisationseinrichtung, wie sie bei dem Kryptographiecontroller von Fig. 1 verwendet werden kann, gemäß einem weiteren Ausführungsbeispiel der vorliegenden Erfindung;
- Fig. 6: ein Blockschaltbild eines herkömmlichen Kryptographiecontrollers; und
- Fig. 7: ein Blockschaltbild eines weiteren herkömmlichen Kryptographiecontrollers.

Bezugnehmend auf Fig. 1 wird zunächst der Aufbau eines Kryptographiecontrollers gemäß einem Ausführungsbeispiel der vorliegenden Erfindung beschrieben. Der Kryptographiecontroller 10 ist in einem einzigen Chip integriert und umfaßt eine CPU 20 und eine Mehrzahl von Peripherieeinheiten 30a und 30b (in Fig. 1 sind lediglich zwei gezeigt). Die CPU 20 ist über einen Taktanschluß 40 mit einer Anschlußvorrichtung 50 und über einen Datenanschluß 60 mit einer Anschlußvorrichtung 70 des Chips 10 verbunden. Während die CPU 20 über den Taktanschluß 40 mit einer Taktfrequenz f_{CPU} versorgt wird, sind die Peripherieeinheiten 30a und 30b über einen Taktanschluß 80a, 80b mit einem Signalausgang 90a, 90b von steuerbaren Oszillatoren 100a und 100b verbunden, um durch dieselben mit einem Taktsignal der Frequenz f₁ bzw. f₂ versorgt zu werden. Ein Datenanschluß 110a und 110b der Peripherieeinheiten 30a und 30b ist zur Taktsynchronisation mit einem ersten Datenanschluß 120a bzw. 120b einer Synchronisationseinrichtung 130a bzw. 130b verbunden, wobei zur Verbindung mit der CPU 20 ein zweiter Datenanschluß 140a bzw. 140b der Synchronisationseinrichtung 130a und 130b mit einem Datenbus 150 verbunden ist, der ebenfalls mit einem Datenanschluß 160 der CPU 20 verbunden ist. Zur Steuerung der Oszillatoren 100a und 100b ist eine Steuereinrichtung 170 vorgesehen, die eine Mehrzahl von Steuerausgängen 180a und 180b aufweist, die mit jeweiligen Steuereingängen 190a und 190b der steuerbaren Oszillatoren 100a und 100b verbunden sind. Die Steuereinrichtung 170 ist über einen Anschluß 200 mit einem Anschluß 210 der CPU 20 verbunden, um von der CPU 20 Steuerparameter zur Steuerung der Oszillatoren 100a und 100b zu erhalten.

Wie es in Fig. 1 gezeigt ist, können alternativ oder zusätzlich zu den Taktanschlüssen 80a und 80b bei einem anderen Ausführungsbeispiel Taktanschlüsse 220a und 220b der Peripherieeinheiten 30a und 30b vorgesehen sein, die mit externen Takteingängen 230a und 230b verbunden sind, um unabhängig voneinander extern zugeführte, unabhängige Takte zu erhalten, wie z.B. während der Kommunikation der Chipkarte mit einem Terminal, so daß die Oszillatoren 100a und 100b nicht in dem Controller 10 integriert sein müßten. In der folgenden Beschreibung wird jedoch auf das Ausführungsbeispiel Bezug genommen wird, bei denen die Oszillatoren 100a und 100b die unabhängigen Takte zuführen.

Nachdem im vorhergehenden der Aufbau des Kryptographiecontrollers 10 beschrieben worden ist, wird im folgenden die Funktionsweise desselben in Bezug auf ein Ausführungsbeispiel beschrieben, bei dem der Kryptographiecontroller 10 in einem Chip integriert und auf einer Chipkarte angeordnet ist, die sich gerade in einem Terminal (nicht gezeigt) befindet. Während sich die Chipkarte in dem Terminal befindet, befinden sich geeignete Kontaktanschlüsse des Terminals in Kommunikation mit den Anschlußvorrichtungen 50 und 70, wobei die CPU 20 an ihrem Taktanschluß 40 ein externes Taktsignal mit der Taktfrequenz f_{CPU} empfängt und über ihren Datenanschluß 60 Daten, wie z.B. codierte Daten, Signaturen, Befehle usw., mit dem Terminal austauscht. Die CPU 20 verteilt je nach momentaner Anwendung Befehle an die Peripherieeinheiten 30a und 30b. Den Peripherieeinheiten 30a und 30b können beispielsweise ein UART-Modul, ein Zufallszahlengenerator, ein Hash-Modul oder dergleichen sein, oder aber sind Coprozessoren, denen Aufgaben oder verschiedene Kryptographiealgorithmen zugeordnet sind, wie z.B. asymmetrische Verschlüsselungsverfahren, wie z.B. der RSA-Algorithmus oder ein auf elliptischen Kurven basierendes Verschlüsselungsverfahren, oder symmetrische Verschlüsselungsverfahren, wie z.B. das Verschlüsselungsverfahren nach dem DES- oder AES-Standard, oder Coprozessoren zum Ausführen unterschiedlicher Teiloperationen einer arithmetischen Operation, wie z.B. einer Multiplikation.

Um einen möglichst effektiven Betrieb des Kryptographiecontrollers 10 bei der speziellen Anwendung, wie z.B. einer RSA-Verschlüsselung, zu erzielen, werden die Peripherieeinheiten 30a und 30b erfindungsgemäß jeweils getrennt von der CPU 20 mit einem Taktsignal einer Taktfrequenz f₁ bzw. f₂ betrieben, welcher von den Oszillatoren 100a und 100b erzeugt wird. Die Anpassung der Taktfrequenzen f₁ und f₂ an die jeweilige Anwendung bzw. die Steuerung der Oszillatoren 100a und 100b wird durch die Steuereinrichtung 170 abhängig von bestimmten Steuerparametern durchgeführt. Die Steuereinrichtung 170 empfängt von der CPU 20 beispielsweise die momentane Anwendung bzw. Applikation des Kryptographiecontrollers 10, wie z.B. eine RSA-Verschlüsselung, als Steuerparameter und steuert dementsprechend diejenigen Kryptographiecoprozessoren oder Peripherieeinheiten 30a und 30b mit einer hohen Taktfrequenz an, deren Rechenleistung bei der Anwendung bzw. Applikation gerade benötigt wird. Es kann beispielsweise vorteilhaft sein, während eines Schlüsselaustausches einen RSA-Coprozessor, während einer Verschlüsselung einen DES-Coprozessor und während der Berechnung eines Hash-Wertes ein Hash-Modul bzw. -Coprozessor höher als die CPU 20 zu takten. Als weiteren Steuerparameter empfängt die Steuereinrichtung 170 beispielsweise einen Wert, der die zur Verfügung stehende Energie für den Kryptographiecontroller 10 angibt, und den dieselbe beispielsweise von einer Meßstelle (nicht gezeigt) empfängt.

Die Steuerung innerhalb der Steuereinrichtung 170 kann beispielsweise durch Zugriff auf eine Nachschlagtabelle durchgeführt werden, in der für bestimmte quantisierte Steuerparameterkombinationen eine Mehrzahl von Steuersignalwerten gespeichert sind, die daraufhin an die Oszillatoren 100a und 100b ausgegeben werden sollen. Die Steuerung innerhalb der Steuereinrichtung 170 kann jedoch ebenfalls durch Proportionalregler oder dergleichen ausgeführt sein, um eine im wesentlichen stufenlose Regelung der Peripherieeinheittakte zu ermöglichen. Falls folglich die zur Verfügung stehende Energie für den Kryptographiecontroller 10 sinkt, wird die Steuereinrichtung 170 die Taktfrequenzen f₁ und f₂ entsprechend verringern.

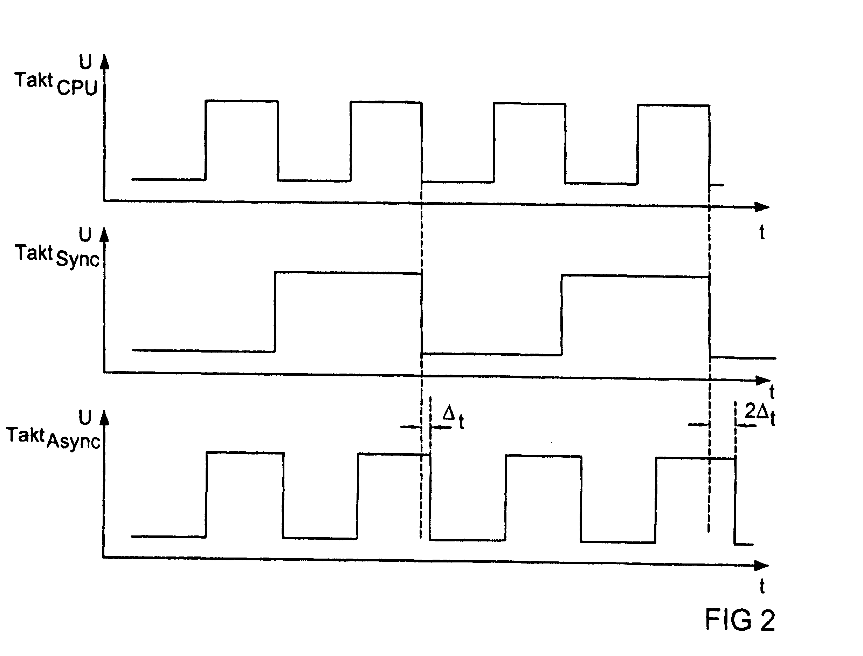

Um die asynchrone Taktung der Peripherieeinheiten bei dem Kryptographiecontroller 10 von Fig. 1 und die Nützlichkeit derselben für einen optimierten Betrieb des Kryptographiecontrollers 10 zu veranschaulichen, sind in Fig. 2 exemplarisch ein Taktsignalverlauf T_{CPU} für die CPU und Taktsignalverläufe für eine der Peripherieeinheiten eines Kryptographiecontrollers von Fig. 7 und für einen der Peripherieeinheiten eines Kryptographiecontrollers von Fig. 1, d.h. Takt_{sync} bzw. Taktₐ _{sync}, dargestellt. Wie es in der Figur durch die gestrichelten Linien veranschaulicht wird, ist das Taktsignal für eine Peripherieeinheit bei dem Kryptographiecontroller von Fig. 7 immer synchron zu dem Taktsignal der CPU Takt_{CPU}. Die Taktfrequenz einer Peripherieeinheit des herkömmlichen Kryptographiecontrollers beträgt immer ein bestimmtes Vielfaches der Taktfrequenz der CPU, wobei das Verhältnis der beiden Taktfrequenzen in dem vorliegenden Fall ½ ist. Demgegenüber ist das Taktsignal Takt_{async} einer Peripherieeinheit des Kryptographiecontrollers von Fig. 1 asynchron zu dem Taktsignal der CPU Takt_{CPU}, und folglich sind beliebige Taktfrequenzverhältnisse einstellbar. Insbesondere können die Frequenz der CPU und die Frequenz einer Peripherieeinheit teilefremd eingestellt sein. Hierdurch wird ermöglicht, daß die Steuereinrichtung die optimalen Taktfrequenzverhältnisse genauer als mit einer bedingten Taktfrequenzeinstellung einstellen kann.

Insbesondere kann die Rechengeschwindigkeit bei gleicher zur Verfügung stehender Energie besser optimiert werden. Zusätzlich ist anders als bei der Frequenzteilung das Einstellen einer schnelleren Taktfrequenz als derjenigen der CPU möglich, wodurch sehr rechenaufwendige Operationen schneller durchführbar sind.

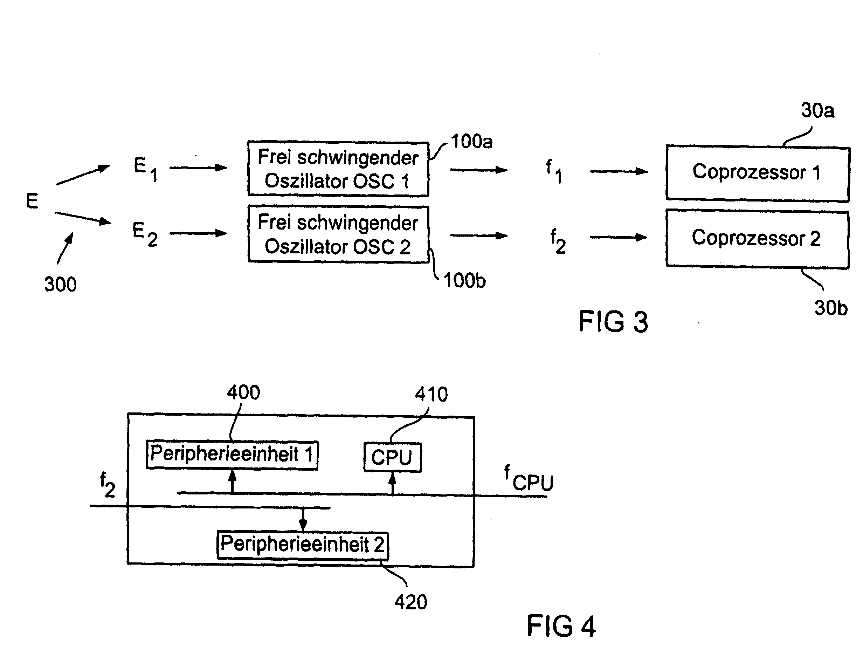

Bezugnehmend auf Fig. 3 wird im folgenden die Aufteilung der zur Verfügung stehenden Energie E auf zwei Peripherieeinheiten gemäß einem Ausführungsbeispiel der vorliegenden Erfindung veranschaulicht, wobei diese Aufteilung durch die Steuereinrichtung (Fig. 1) durchgeführt wird. Die Steuereinrichtung empfängt den Wert der zur Verfügung stehenden Energie E und bestimmt abhängig von Parametern, wie z.B. der augenblicklichen Applikation des Kryptographiecontrollers 10 und den Aufgaben der Peripherieeinheiten 30a und 30b, die Aufteilung der zur Verfügung stehenden Energie in Energieportionen E₁ und E₂, wie es bei 300 dargestellt ist, und stellt abhängig von diesen Energieportionen die freischwingenden Oszillatoren 100a und 100b derart ein, daß dieselben die Peripherieeinheiten 30a und 30b mit Taktfrequenzen f₁ und f₂ takten, die den jeweiligen Energieportionen E₁ und E₂ entsprechen. Da, wie im vorhergehenden beschrieben, die Taktung der Peripherieeinheiten erfindungsgemäß unabhängig von Vielfachen des CPU-Takts erfolgen kann, ist eine optimale Ausnutzung der zur Verfügung stehenden Energie E möglich, indem die Steuereinrichtung die Taktfrequenzen f₁ und f₂ derart einstellt, daß die sich ergebenden Energieportionen E₁ und E₂ die Energie E im wesentlichen restlos aufbrauchen (E - E1 - E2 ≈ 0).

Das Verhältnis zwischen E₁ und f₁ bzw. E₂ und f₂ kann beispielsweise vorab beim Schaltungsentwurf bestimmt worden sein, um abhängig von einer zur Verfügung stehenden Energie und den unterschiedlichen möglichen Applikationen sowohl in Bezug auf eine optimale Energieaufteilung als auch in Bezug auf eine optimale Rechengeschwindigkeit eine Nachschlägtabelle zu erzeugen, in der für verschiedene Parameter und für verschiedene zur Verfügung stehende Energien E optimale Energieportionen gespeichert sind, oder um entsprechende funktionale Zusammenhänge zu bestimmen und schaltungsmäßig zu implementieren.

In Fig. 4 ist in sehr vereinfachter Darstellung ein Ausführungsbeispiel einer Kryptographiecontrollers veranschaulicht, bei dem eine Mehrzahl von Peripherieeinheiten in dem Kryptographiecontroller keinen eigenen Oszillator aufweist, sondern mit dem selben Takt wie die CPU getaktet wird (es ist stellvertretend lediglich eine solche Peripherieeinheit gezeigt). Wie es zu sehen ist, werden sowohl eine Peripherieeinheit 400 als auch eine CPU 410 mit einer Taktfrequenz f_{CPU} getaktet, während eine Peripherieeinheit 420 mit einer zum CPU-Takt asynchronen Taktfrequenz f₂ getaktet wird. Auch bei diesem Ausführungsbeispiel kann durch die asynchrone Taktung der Peripherieeinheit 420 die Taktfrequenz f₂ optimaler angepaßt werden, um beispielsweise bei gleicher zur Verfügung stehender Energie eine optimalere Rechengeschwindigkeit zu erzielen.

Nachdem im vorhergehenden die erfindungsgemäße asynchrone Taktung und deren vorteilhafte Verwendung allgemein beschrieben worden ist, wird im folgenden die vorteilhafte Anwendung derselben bei einer Chipkarte beschrieben, die bei Terminals eingesetzt wird, die derselben eine schwankende Energie zuführen, wie z.B. Kontaktlosterminals und Mobilgeräte. Die Energie, die der Chipkarte von einem Kontaktlosterminal oder dem Kartenleser eines Mobilgerätes zugeführt wird, ist auf weniger als 10 mA begrenzt. Um die der Chipkarte bzw. der elektronischen Schaltung geringe zur Verfügung stehende Energie bestmöglich auszunutzen, steuert die Steuereinrichtung die Taktfrequenzen der Peripherieeinheiten derart, daß die zur Verfügung stehende Energie vollständig unter den Peripherieeinheiten (und der CPU) aufgeteilt wird. Die Aufteilungsverhältnisse steuert die Steuereinrichtung nach weiteren Steuerparametern, wie z.B. der augenblicklichen Applikation der Chipkarte und/oder den Aufgaben der Peripherieeinheiten. Die optimale bzw. vollständige Ausnutzung der zur Verfügung stehenden Energie wird, wie im vorhergehenden beschrieben, durch die asynchrone Taktung der Peripherieeinheiten unabhängig von der CPU-Taktung erzielt, da die Einstellung der Taktfrequenzen der Peripherieeinheiten unabhängig von Vielfachen des CPU-Takts erfolgen kann.

In einem einfachen Fall beispielsweise, bei dem Coprozessoren sequentiell verwendet werden, könnte die Steuereinrichtung die Taktfrequenzen der Coprozessoren beispielsweise derart steuern, daß die aufgrund der soeben vorliegenden Applikation unbenutzten Coprozessoren langsamer getaktet oder sogar ausgeschaltet werden, und der zur Zeit von der Applikation benötigte Coprozessor mit der Taktfrequenz arbeitet, die eine maximale Energieausnutzung für die gesamte Chipkarte ergibt. In dem speziellen Fall des Einsatzes der Chipkarte bei einem Kontaktlosterminal kann somit auch eine optimal und kontinuierliche Anpassung an die sich ändernde zugeführte Energie, die sich durch Abstandsänderungen zwischen der Chipkarte und dem Kontaktlosterminal ergibt, vorgenommen werden, indem eine von Vielfachen des CPU-Takts unabhängige, unmittelbare Nachführung der Taktfrequenz des von der Applikation gerade benötigten Coprozessors durchgeführt wird. Ist die Chipkarte weiter von dem Terminal entfernt, so steht weniger Energie zu Verfügung, und die Taktfrequenz wird reduziert, während, wenn die Chipkarte näher an das Terminal gelangt, mehr Energie zur Verfügung steht, und der Coprozessor höher getaktet wird.

Nachdem im vorhergehenden die Betriebsoptimierung durch die asynchrone Taktung der Peripherieeinheiten beschrieben worden ist, wird im folgenden wiederum bezugnehmend auf Fig. 1 die Einsynchronisation der ein- und abgehenden Daten, wie z.B. Befehlen, Steuersignalen, verschlüsselten oder unverschlüsselten Daten oder Schlüsselparametern, bzw. der Ein- und Ausgänge (in Fig. 1 stellvertretend durch einen Anschluß 110a bzw. 110b dargestellt) der Peripherieeinheiten 30a und 30b beschrieben, wie sie durch die asynchrone Taktung derselben erforderlich gemacht wird. Diese Einsynchronisation wird durch die Synchronisationseinrichtungen 130a und 130b durchgeführt. Die Synchronisationseinrichtungen 130a bzw. 130b übernehmen sowohl die Einsynchronisation von Daten, die auf dem mit der Taktfrequenz f_{CPU} getakteten Bus 150 übertragen werden, zu der Peripherieeinheit 30a bzw. 30b als auch die Einsynchronisation von Daten, die von der Peripherieeinheit 30a bzw. 30b auf dem Bus 150 ausgegeben werden. Gemäß einem Ausführungsbeispiel werden bei einer Einsynchronisation von Daten von dem Datenbus 150 zu den Peripherieeinheiten 30a und 30b zwei Fälle unterschieden, wobei die Unterscheidung im umgekehrten Fall, nämlich der Einsynchronisation von Daten zu dem Datenbus 150, entsprechend durchgeführt wird. In dem Fall, daß f_{CPU} > fᵢ (mit i = 1,2), werden die Daten zunächst mit einer Frequenz f_{CPU} in ein Register der Synchronisationseinrichtung 130a bzw. 130b geschrieben und danach mit einer Taktfrequenz fᵢ aus demselben ausgelesen. In dem Fall, daß f_{CPU} < fᵢ werden die Daten entweder ebenfalls über ein Register geschrieben und ausgelesen oder dieselben werden durch eine Synchronisationsschaltung innerhalb der Synchronisationseinrichtung 130a bzw. 130b synchronisiert. Die selben Maßnahmen werden für die Einsynchronisation von Daten von der Peripherieeinheit 30a bzw. 30b auf den Datenbus 150 getroffen.

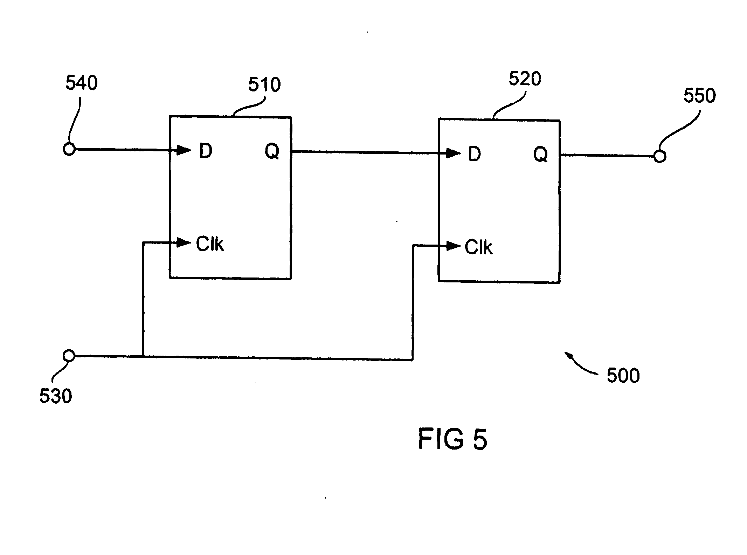

Eine Synchronisationsschaltung gemäß einem Ausführungsbeispiel der vorliegenden Erfindung, wie sie bei der Synchronisationseinrichtung 130a bzw. 130b verwendet werden kann, ist in Fig. 5 gezeigt. Die Synchronisationsschaltung 500 von Fig. 5 besteht aus zwei hintereinander geschalteten Synchronisations-Flip-Flops bzw. D-Flip-Flops 510 und 520, deren Takteingang CLK gemeinsam mit einem Taktanschluß 530 (nicht gezeigt in Fig. 1) der Synchronisationsschaltung 500 verbunden ist. Ein D-Eingang des Flip-Flops 510 ist mit einem Eingangsanschluß 540, ein Q-Ausgang des Flip-Flops 510 mit einem D-Eingang des Flip-Flops 520 und ein Q-Ausgang des Flip-Flops 520 mit einem Ausgangsanschluß 550 der Synchronisationsschaltung 500 verbunden. Je nachdem, ob von dem Datenbus zu einer Peripherieeinheit oder umgekehrt einsynchronisiert wird, liegen an dem Taktanschluß 530, dem Eingangsanschluß 540 und dem Ausgangsanschluß 550 entweder ein Taktsignal der Frequenz f₁, Daten von dem Datenbus 150 bzw. Daten zu der Peripherieeinheit oder ein Taktsignal der Taktfrequenz f_{CPU}, Daten von der Peripherieeinheit bzw. Daten zu dem Datenbus 150 an.

Die Synchronisationsschaltung 500 ist derart aufgebaut, daß das erste Flip-Flop 510 eine Abtastung der Daten an dem Eingangsanschluß 540 vornimmt, während das zweite Flip-Flop 520 verhindert, daß sich metastabile Zustände, die sich bilden, wenn Flanken der Daten- oder Steuersignale an dem Eingangsanschluß 540 in den Bereich von Abtastseiten des Flip-Flops 510, wie z.B. in die Bereiche der Taktflanken des Taktsignals an dem Taktanschluß 530, fallen, nicht negativ auf die Ausgangsdaten auswirken. Ein metastabiler Zustand, der sich an dem Ausgang Q des Flip-Flops 510 einstellt, ist nach einem weiteren Takt des Taktsignals an dem Taktanschluß 530 wieder gültig, so daß an dem Ausgang Q des Flip-Flops 520 immer gültige Datenausgangswerte ausgegeben werden.

Es sei darauf hingewiesen, daß, obwohl sich die vorhergehende Beschreibung auf einen Kryptographiecontroller bezog, die vorliegende Erfindung ferner auf alle anderen elektronischen Schaltungen anwendbar ist, bei denen zumindest eine zentrale Verarbeitungseinheit und eine Peripherieeinheit vorgesehen sind. Zudem ist die genaue Implementierung der elektronischen Schaltung nicht auf eine integrierte Schaltung begrenzt, sondern die elektronische Schaltung kann ferner auf einer Platine implementiert sein. Die Synchronisationseinrichtungen können andere Synchronisationsschaltungen als diejenige, die in Fig. 5 gezeigt ist, enthalten. Zudem können die Synchronisationseinrichtungen innerhalb einer Host-Schnittstelle der Peripherieeinheiten umfaßt sein. Es wird ferner darauf hingewiesen, daß wie bei den Kryptographiecontrollern von Fig. 6 und 7 bei dem Kryptographiecontroller von Fig. 1 eine PLL als Taktvervielfacher an dem Taktanschluß der CPU vorgesehen sein kann, um die Taktfrequenz des extern zugeführten Takts zu vervielfachen.

Ferner wird darauf hingewiesen, daß es für die vorliegende Erfindung nicht notwendig ist, daß die Peripherieeinheiten fest mit den steuerbaren Oszillatoren verbunden sind. Es könnte ferner vorgesehen sein, daß die steuerbaren Oszillatoren in dem Terminal vorgesehen sind, und daß die Taktanschlüsse der Peripherieeinheiten mit geeigneten Anschlußvorrichtungen verbunden sind, die wiederum mit geeigneten Kontaktanschlüssen an dem Terminal verbindbar sind, an denen das Taktsignal der steuerbaren Oszillatoren anliegt. Insbesondere wäre je ein Kontaktanschluß mit dem Signalausgang eines steuerbaren Oszillators verbunden, während je eine Anschlußvorrichtung mit dem Taktanschluß der Peripherieeinheit bzw. mit dem Taktanschluß der zentralen Verarbeitungseinheit verbunden wäre. In diesem Fall wäre zusätzlich für jedes unabhängige Taktsignal ein weiterer Kontaktanschluß an dem Terminal und eine weitere Anschlußvorrichtung zur Übertragung von Steuersignalen von der Steuereinrichtung zu den steuerbaren Oszillatoren vorgesehen.

In Bezug auf die vorhergehende Beschreibung wird darauf hingewiesen, daß die Anschlußvorrichtungen nicht nur auf den Einsatz bei einem Kontaktterminal angepaßt sein können. Dieselben können ferner zur kontaktlosen Energieaufnahme bei Kontaktlosterminals angepaßt sein, wie es in der vorhergehenden Beschreibung bezüglich der optimalen Energieausnutzung beschrieben wurde.

Bezugnehmend auf Fig. 4 wird ferner darauf hingewiesen, daß weitere Möglichkeiten bestehen, um gemäß der vorliegenden Erfindung Peripherieeinheiten zu takten. Es kann beispielsweise vorgesehen sein, daß ein Teil der Peripherieeinheiten der elektronischen Schaltung wie in Fig. 7 über einen Taktteiler mit einem von dem Takt der CPU abgeleiteten Takt getaktet wird. Es ist ferner möglich, unterschiedliche asynchrone Taktbäume zu bilden, indem an den asynchronen Takt eines steuerbaren Oszillators eine Mehrzahl von Peripherieeinheiten angeschlossen werden, die über Taktteiler jeweils einen von dem asynchronen Takt des steuerbaren Oszillators abgeleiteten Takt erhalten. Auf diese Weise könnten beispielsweise Peripherieeinheiten, die bei speziellen Anwendungen zusammen oder parallel arbeiten, der CPU gegenüber asynchron getaktet werden, während dieselben untereinander synchron, mit bestimmten Vielfachen des gemeinsamen asynchronen Takts, getaktet werden.

### Bezugszeichenliste

- 10: Kryptographiecontroller
- 20: CPU
- 30a: Peripherieeinheit
- 30b: Peripherieeinheit
- 40: Taktanschluß
- 50: Anschlußvorrichtung
- 60: Datenanschluß
- 70: Anschlußvorrichtung
- 80a: Taktanschluß
- 80b: Taktanschluß
- 90a: Signalausgang
- 90b: Signalausgang
- 100a: steuerbarer Oszillator
- 100b: steuerbarer Oszillator
- 110a: Datenanschluß
- 110b: Datenanschluß
- 120a: erster Datenanschluß
- 120b: erster Datenanschluß
- 130a: Synchronisationseinrichtung
- 130b: Synchronisationseinrichtung
- 140a: zweiter Datenanschluß
- 140b: zweiter Datenanschluß
- 150: Datenbus
- 160: Datenanschluß
- 170: Steuereinrichtung
- 180a: Steuerausgang
- 180b: Steuerausgang
- 190a: Steuereingang
- 190b: Steuereingang
- 200: Anschluß
- 210: Anschluß
- 220a: Taktanschluß
- 220b: Taktanschluß
- 230a: externer Takteingang
- 230b: externer Takteingang
- 300: Energieaufteilung
- 400: Peripherieeinheit
- 410: CPU
- 420: Peripherieeinheit
- 510: D-Flip-Flop
- 520: D-Flip-Flop
- 530: Taktanschluß
- 540: Eingangsanschluß
- 550: Ausgangsanschluß
- 900: Kryptographiecontroller
- 910: CPU
- 920a: Peripherieeinheit
- 920b: Peripherieeinheit
- 930: Datenanschluß
- 940a: Datenanschluß
- 940b: Datenanschluß
- 950: Datenbus
- 960: Datenanschluß
- 970: Anschlußvorrichtung
- 980: Taktanschluß
- 990: PLL
- 1000: Anschlußvorrichtung
- 1010a: Taktteiler
- 1010b: Taktteiler

## Patentansprüche

1. Elektronische Schaltung mit
einer zentralen Verarbeitungseinheit (20) mit einem Taktanschluß (40) zum Erhalten eines ersten Takts und einem Datenanschluß (160);
einer Recheneinheit (30a, 30b) mit einem Taktanschluß (80a, 80b) und einem Datenanschluß (110a, 110b), wobei der Taktanschluß (80a, 80b) mit einem Signalausgang (90a, 90b) eines steuerbaren Oszillators (100a, 100b) oder mit einem externen Takteingang (230a, 230b) verbunden ist, so daß die Recheneinheit (30a, 30b) einen zweiten, zu dem ersten unterschiedlichen Takt erhält,
einer Synchronisationseinrichtung (130a, 130b) mit einem ersten und einem zweiten Datenanschluß (120a, 120b, 140a, 140b), wobei der erste Datenanschluß (120a, 120b) mit dem Datenanschluß (110a, 110b) der Recheneinheit (30a, 30b) verbunden ist; und
einem Datenbus (150), der mit dem Datenanschluß (160) der zentralen Verarbeitungseinheit (20) und dem zweiten Datenanschluß (140a, 140b) der Synchronisationseinrichtung (130a, 130b) verbunden ist, **dadurch gekennzeichnet, dass** die Taktfrequenz (f1) das zweiten Takts zu der Taktfrequenz (f_{CPU}) des ersten Takts teilerfremd ist.

2. Elektronische Schaltung gemäß Anspruch 1, bei der die zentrale Verarbeitungseinheit, die Recheneinheit, die Synchronisationseinrichtung und der Datenbus auf einer gemeinsamen Chipkarte angeordnet sind, die zwei externe Anschlußvorrichtungen aufweist, die angeordnet sind, um mit entsprechenden zwei Kontaktanschlüssen eines Terminals verbindbar zu sein, wobei ein erster der Kontaktanschlüsse mit dem Signalausgang des steuerbaren Oszillators verbunden ist, und an dem zweiten der Kontaktanschlüsse ein Taktsignal für die zentrale Verarbeitungseinheit anliegt, ein erster der externen Anschlußvorrichtungen mit dem Taktanschluß der Recheneinheit und der zweite der externen Anschlußvorrichtungen mit dem Taktanschluß der zentralen Verarbeitungseinheit verbunden ist.

3. Elektronische Schaltung gemäß Anspruch 1, bei der die zentrale Verarbeitungseinheit, die Recheneinheit, die Synchronisationseinrichtung, der Datenbus und der Oszillator auf einer gemeinsamen Chipkarte angeordnet sind, und der Taktanschluß (80a, 80b) der Recheneinheit (30a, 30b) mit dem Signalausgang (90a, 90b) des steuerbaren Oszillators verbunden ist.

4. Elektronische Schaltung gemäß Anspruch 1 oder 3, bei der die zentrale Verarbeitungseinheit (20), die Recheneinheit (30a, 30b), der Datenbus (150), der steuerbare Oszillator (100a, 100b) und die Synchronisationseinrichtung (130a, 130b) in einer integrierten Schaltung (10) integriert sind.

5. Elektronische Schaltung gemäß einem der Ansprüche 1 bis 4, die ferner folgendes Merkmal aufweist:
eine Steuereinrichtung (170) mit einem Steuerausgang (180a, 180b), wobei der Steuerausgang (180a, 180b) mit dem Steuereingang (190a, 190b) des steuerbaren Oszillators (100a, 100b) verbunden ist, und wobei die Steuereinrichtung (170) angeordnet ist, um den steuerbaren Oszillator (100a, 100b) abhängig von einem Steuerparameter zu steuern.

6. Elektronische Schaltung gemäß Anspruch 5, bei der die Steuereinrichtung (170) angeordnet ist, um den steuerbaren Oszillator (100a, 100b) abhängig von einer Aufgabe, die die Recheneinheit (30a, 30b) ausführt, einer Applikation der elektronischen Schaltung oder einer zur Verfügung stehenden Energie (E) für die elektronische Schaltung als Steuerparameter zu steuern.

7. Elektronische Schaltung gemäß einem der Ansprüche 1 bis 6, bei der der steuerbare Oszillator (100a, 100b) steuerbar ist, um an einem Signalausgang (90a, 90b) ein Ausgangssignal zu liefern, dessen Frequenz (f₁, f₂) höher als eine Frequenz (f_{CPU}) eines Taktsignals ist, das dem Taktanschluß (40) der zentralen Verarbeitungseinheit (20) zuführbar ist.

8. Elektronische Schaltung gemäß einem der Ansprüche 1 bis 7, bei der der steuerbare Oszillator (100a, 100b) steuerbar ist, um ein Ausgangssignal zu liefern, dessen Frequenz (f₁, f₂) zu einer Frequenz (f_{CPU}) eines Taktsignals, das dem Taktanschluß (40) der zentralen Verarbeitungseinheit (20) zuführbar ist, teilerfremd ist.

9. Elektronische Schaltung gemäß einem der Ansprüche 1 bis 8, die als Kryptographiecontroller ausgeführt ist.

10. Elektronische Schaltung gemäß einem der Ansprüche 1 bis 9, bei der die Recheneinheit (30a, 30b) ein Coprozessor für einen einer Gruppe von kryptographischen Algorithmen, die eine asymmetrische Verschlüsselung oder eine symmetrische Verschlüsselung umfaßt, ein Sende/Empfangsmodul, ein Filter, ein Hash-Modul, ein Zufallsgenerator oder ein Sensorelement ist.

11. Elektronische Schaltung gemäß einem der Ansprüche 1 bis 10 mit einer Mehrzahl von Recheneinheiten (30a, 30b), wobei jede Recheneinheit (30a, 30b) mit einem eigenen steuerbaren Oszillator verbindbar ist, oder wo bei verschiedenen der Mehrzahl von Recheneinheiten (30a, 30b) Taktsignale mit Frequenzen zugeführt werden, die von dem steuerbaren Oszillator (100a, 100b) abgeleitet werden.

12. Elektronische Schaltung gemäß einem der Ansprüche 1 bis 11, bei der jeder Recheneinheit (30a, 30b) eine eigene Aufgabe zugeordnet ist, wobei die Aufgaben aus einer Gruppe ausgewählt sind, die die Berechnung einer modularen Multiplikation, einer modularen Addition, einer Hash-Wertberechnung, eine RSA-Verschlüsselung, eine auf elliptischen Kurven basierende Verschlüsselung, eine Verschlüsselung nach dem DES-Standard, das Bilden von Zufallszahlen oder das Überprüfen sicherheitskritischer Parameter umfaßt.

13. Verfahren zum Steuern einer elektronischen Schaltung mit einer zentralen Verarbeitungseinheit (CPU) (20) und einer Recheneinheit (30a, 30b), die über einen Datenbus (150) miteinander verbunden sind, mit folgenden Schritten:
Takten der zentralen Verabreitungseinheit (20) mit einem ersten Takt;
Takten der Recheneinheit (30a, 30b) mit einem zweiten, zu dem ersten unterschiedlichen Takt, so daß die Taktfrequenz (f₁) des zweiten Takts zu der Taktfrequenz (f_{CPU}) des ersten Takts teilerfremd ist;
Synchronisieren von Daten, die über den Datenbus (150) zwischen der zentralen Verarbeitungseinheit (20) und der Recheneinheit (30a, 30b) übertragen werden.

## Claims

1. An electronic circuit comprising:
a central processing unit (20) having a clock connection (40) for receiving a first clock and a data connection (160);
a computing unit (30a, 30b) having a clock connection (80a, 80b) and a data connection (110a, 110b), said clock connection (80a, 80b) being connected to a signal output (90a, 90b) of a controllable oscillator (100a, 100b) or to an external clock input (230a, 230b), so that the computing unit (30a, 30b) receives a second clock which is different from the first clock;
synchronization means (130a, 130b) comprising a first and a second data connection (120a, 120b, 140a, 140b), said first data connection (120a, 120b) being connected to said data connection (110a, 110b) of said computing unit (30a, 30b); and
a data bus (150) being connected to said data connection (160) of said central processing unit (20) and to said second data connection (140a, 140b) of said synchronization means (130a, 130b), **characterized in that** the clock frequency (f₁) of the second clock has no common divisor with the clock frequency (f_{CPU}) of the first clock.

2. The electronic circuit according to claim 1, wherein said central processing unit, said computing unit, said synchronization means and said data bus are arranged on a common chip card having two external connection devices being arranged to be connectable to two corresponding contact connections of a terminal, a first of said contact connections being connected to said signal output of said controllable oscillator, a clock signal for said central processing unit being applied at the second of said contact connections, a first of said external connection devices being connected to said clock connection of said computing unit and the second of said external connection devices being connected to said clock connection of said central processing unit.

3. The electronic circuit according to claim 1, wherein said central processing unit, said computing unit, said synchronization means, said data bus and said oscillator are arranged on a common chip card, and wherein said clock connection (80a, 80b) of said computing unit (30a, 30b) is connected to said signal output (90a, 90b) of said controllable oscillator.

4. The electronic circuit according to claims 1 or 3, wherein said central processing unit (20), said computing unit (30a, 30b), said data bus (150), said controllable oscillator (100a, 100b) and said synchronization means (130a, 130b) are integrated into an integrated circuit (10).

5. The electronic circuit according to one of claims 1 to 4, further comprising:
controlling means (170) having a control output (180a, 180b), said control output (180a, 180b) being connected to said control input (190a, 190b) of said controllable oscillator (100a, 100b), and said controlling means (170) being arranged to control said controllable oscillator (100a, 100b) depending on a control parameter.

6. The electronic circuit according to claim 5, wherein said controlling means (170) is arranged to control said controllable oscillator (100a, 100b) as a control parameter depending on a task performed by said computing unit (30a, 30b), an application of said electronic circuit or energy (E) available for said electronic circuit.

7. The electronic circuit according to one of claims 1 to 6, wherein said controllable oscillator (100a, 100b) is controllable to provide an output signal at a signal output (90a, 90b), the frequency (f₁, f₂) of which is faster than a frequency (f_{CPU}) of a clock signal which can be fed to said clock connection (40) of said central processing unit (20).

8. The electronic circuit according to one of claims 1 to 7, wherein said controllable oscillator (100a, 100b) is controllable to provide an output signal, the frequency (f₁, f₂) of which has no common divisor with a frequency (f_{CPU}) of a clock signal which can be fed to said clock connection (40) of said central processing unit (20).

9. The electronic circuit according to one of claims 1 to 8, being embodied as a cryptography controller.

10. The electronic circuit according to one of claims 1 to 9, wherein said computing unit (30a, 30b) is a coprocessor for one of a group of cryptographic algorithms including an asymmetrical encrypting or a symmetrical encrypting, a transceiver, a filter, a hash module, a random generator or a sensor element.

11. The electronic circuit according to one of claims 1 to 10, comprising a plurality of computing units (30a, 30b), each computing unit (30a, 30b) being connectable to a separate controllable oscillator, or wherein clock signals with frequencies are fed to various of said plurality of computing units (30a, 30b), these frequencies being derived from said controllable oscillator (100a, 100b).

12. The electronic circuit according to one of claims 1 to 11, wherein a separate task is associated to each computing unit (30a, 30b), the tasks being selected from a group including computing a modular multiplication, a modular addition, a hash value computation, an RSA encrypting, an encrypting based on elliptical curves, an encrypting according to the DES standard, forming random numbers or checking safety-critical parameters.

13. A method of controlling an electronic circuit having a central processing unit (CPU) (20) and a computing unit (30a, 30b) being connected to each other via a data bus (150), comprising:
clocking said central processing unit (20) by a first clock;
clocking said computing unit (30a, 30b) by a second clock which is different from the first clock, so that the clock frequency (f₁) of the second clock is relatively prime with respect to the clock frequency (f_{CPU}) of the first clock; and
synchronizing data transmitted between said central processing unit (20) and said computing unit (30a, 30b) via said data bus (150).

## Revendications

1. Circuit électronique comprenant :
une unité (20) centrale de traitement ayant une borne (40) de cadence destinée à l'obtention d'une première cadence et une borne (160) de données;
une unité (30a, 30b) de calcul ayant une borne (80a, 80b) de cadence et une borne (110a, 110b) de données, la borne (80a, 80b) de cadence étant reliée à une sortie (90a, 90b) de signal d'un oscillateur (100a, 100b) pouvant être commandé ou à une entrée (230a, 230b) extérieure de cadence, de sorte que l'unité (30a, 30b) de calcul reçoive une deuxième cadence différente de la première;
un dispositif (130a, 130b) de synchronisation ayant une première et une deuxième borne (120a, 120b, 140a, 140b) de données, la première borne (120a, 120b) de données étant reliée à la borne (110a, 110b) de données de l'unité (30a, 30b) de calcul; et
un bus (150) de données qui est relié à la borne (160) de données de l'unité (20) centrale de traitement et à la deuxième borne (140a, 140b) de données de l'unité (130a, 130b) de synchronisation, **caractérisé en ce que** la fréquence (f₁) de la deuxième cadence est première par rapport à la fréquence (f_{cpu}) de la première cadence.

2. Circuit électronique suivant la revendication 1, dans lequel l'unité centrale de traitement, l'unité de calcul, le dispositif de synchronisation et le bus de données sont disposés sur une carte à puce commune qui a deux dispositifs extérieurs de bornes disposés de façon à pouvoir être reliés à deux bornes correspondantes de contact d'un terminal, une première des bornes de contact étant reliée à la sortie du signal de l'oscillateur qui peut être commandé, et il s'applique à la deuxième des bornes de contact un signal de cadence pour l'unité centrale de traitement, un premier des dispositifs extérieurs de bornes étant relié à la borne de cadence de l'unité de calcul et le deuxième des dispositifs extérieurs de bornes étant relié à la borne de cadence de l'unité centrale de traitement.

3. Circuit électronique suivant la revendication 1, dans lequel l'unité centrale de traitement, l'unité de calcul, le dispositif de synchronisation, le bus de données et l'oscillateur sont disposés sur une carte à puce commune et la borne (80a, 80b) de l'unité (30a, 30b) de calcul est reliée à la sortie (90a, 90b) de signal de l'oscillateur qui peut être commandé.

4. Circuit électronique suivant la revendication 1 ou 3, dans lequel l'unité (20) centrale de traitement, l'unité (30a, 30b) de calcul, le bus (150) de données, l'oscillateur (100a, 100b) qui peut être commandé et le dispositif (130a, 130b) de synchronisation sont intégrés en un circuit (10) intégré.

5. Circuit électronique suivant l'une des revendications 1 à 4, qui a, en outre, la caractéristique suivante :
un dispositif (170) de commande ayant une sortie (180a, 180b) de commande, la sortie (180a, 180b) de commande étant reliée à l'entrée (190a, 190b) de commande de l'oscillateur (100a, 100b) qui peut être commandé et le dispositif (170) de commande étant disposé de manière à commander en fonction d'un paramètre de commande l'oscillateur (100a, 100b) qui peut être commandé.

6. Circuit électronique suivant la revendication 5, dans lequel le dispositif (170) de commande est disposé de manière à commander comme paramètre de commande l'oscillateur (100a, 100b) qui peut être commandé en fonction d'une tâche, qu'exécute l'unité (30a, 30b) de calcul, d'une application du circuit électronique ou d'une énergie (E) mise à disposition du circuit électronique.

7. Circuit électronique suivant l'une des revendications 1 à 6, dans lequel l'oscillateur (100a, 100b) qui peut être commandé peut être commandé de façon à fournir à une sortie (90a, 90b) du signal, un signal de sortie dont la fréquence (f₁, f₂) est plus haute qu'une fréquence (f_{cpu}) d'un signal de cadence qui peut être envoyé à la borne (40) de cadence de l'unité (20) centrale de traitement.

8. Circuit électronique suivant l'une des revendications 1 à 8, dans lequel l'oscillateur (100a, 100b) qui peut être commandé peut être commandé de manière à fournir un signal de sortie dont la fréquence (f₁, f₂) est première par rapport à une fréquence (f_{cpu}) d'un signal de cadence qui peut être envoyé à la borne (40) de cadence de l'unité (20) centrale de traitement.

9. Circuit électronique suivant l'une des revendications 1 à 8, qui est réalisé en contrôleur de cryptographie.

10. Circuit électronique suivant l'une des revendications 1 à 9, dans lequel l'unité (30a, 30b) de calcul est un coprocesseur pour l'un d'un groupe d'algorithmes de cryptographie, qui comprend un chiffrage dissymétrique ou un chiffrage symétrique, un module de d'émission/réception, un filtre, un module de Hash, un générateur de nombres aléatoires ou un élément capteur.

11. Circuit électronique suivant l'une des revendications 1 à 10, comprenant une pluralité d'unités (30a, 30b) de calcul, chaque unité (30a, 30b) de calcul pouvant être reliée à son propre oscillateur pouvant être commandé ou dans lequel, pour des différences dans la pluralité d'unités (30a, 30b) de calcul, il est envoyé des signaux de cadence ayant des fréquences qui dérivent de l'oscillateur (10a, 100b), qui peut être commandé.

12. Circuit électronique suivant l'une des revendications 1 à 11, dans lequel il est associé à chaque unité (30a, 30b) de calcul sa propre tâche, les tâches étant choisies dans un groupe qui comprend le calcul d'une multiplication modulaire, d'une addition modulaire, un calcul de valeur de Hash, un chiffrage RSA, un chiffrage reposant sur une courbe elliptique, un chiffrage suivant le standard DES, la formation de nombres aléatoires ou le contrôle de paramètres critiques du point de vue de la sécurité.

13. Procédé de commande d'un circuit électronique ayant une unité (CPU) (20) centrale de traitement et une unité (30a, 30b) de calcul qui sont reliées entre elles par un bus (150) de données comprenant les stades suivant :
cadencement de l'unité (20) centrale de traitement par une première cadence;
cadencement de l'unité (30a, 30b) de calcul par une deuxième cadence différente de la première de sorte que la fréquence (f₁) de la deuxième cadence soit première par rapport à la fréquence (f_{cpu}) de la première cadence;
synchronisation de données qui sont transmises par le bus (150) de données entre l'unité (20) centrale de traitement et l'unité (30a, 30b) de calcul.
